(19) Europäisches Patentamt / European Patent Office / Office européen des brevets

(11) **EP 1 774 669 B1**

(12) **FASCICULE DE BREVET EUROPEEN**

(45) Date de publication et mention de la délivrance du brevet:
**22.01.2014 Bulletin 2014/04**

(21) Numéro de dépôt: **05793275.8**

(22) Date de dépôt: **20.07.2005**

(51) Int Cl.:
***H04B 1/707*** *(2011.01)*

(86) Numéro de dépôt international:
**PCT/FR2005/001870**

(87) Numéro de publication internationale:
**WO 2006/018505 (23.02.2006 Gazette 2006/08)**

(54) **PROCEDE D'ETALEMENT DE SPECTRE AVEC EFFACEMENT DE SOUS-BANDES**

SPREIZSPEKTRUMVERFAHREN MIT ENTFERNUNG VON SUBBÄNDERN

SPREAD SPECTRUM METHOD WITH ELIMINATION OF SUB-BANDS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.07.2004 FR 0408296**

(43) Date de publication de la demande:
**18.04.2007 Bulletin 2007/16**

(73) Titulaire: **Centre National d'Etudes Spatiales (C.N.E.S.)**
**75039 Paris Cedex 01 (FR)**

(72) Inventeurs:
• **DUVERDIER, Alban**
**F-31500 Toulouse (FR)**
• **CHAUVET, Wilfried**
**F-31000 Toulouse (FR)**

(74) Mandataire: **Gendron, Vincent Christian et al**
**Novagraaf Technologies**
**122, rue Edouard Vaillant**
**92593 Levallois-Perret Cedex (FR)**

(56) Documents cités:
• **R. ISHII M. KAKISHITA: "A design method for a periodically time-varying digital filter for spectrum scrambling" IEEE TRANSACTIONS ON ACOUSTIC AND SIGNAL PROCESSING, vol. 38, no. 7, juillet 1990 (1990-07), pages 1219-1222, XP002320950**
• **CHAUVET W ET AL: "Design of orthogonal LPTV filters: application to spread spectrum multiple access" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, vol. 2, 17 mai 2004 (2004-05-17), pages 645-648, XP010717983 ISBN: 0-7803-8484-9**
• **CHAUVET W ET AL: "Characterization of a set of invertible LPTV filters using circulant matrices" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 6 avril 2003 (2003-04-06), pages VI45-VI48, XP010639412 ISBN: 0-7803-7663-3**

**Description**

La présente invention concerne un procédé et un dispositif d'étalement de spectre.

Elle s'applique notamment, mais non exclusivement aux transmissions par satellite et aux télécommunications mobiles, utilisant des techniques d'étalement de spectre.

Lors de transmissions brouillées par des interféreurs à bande de fréquences limitée, les récepteurs mettent en général en place des stratégies de détection et d'élimination des brouilleurs. Il est également possible d'utiliser une technique d'étalement spectral qui limite les influences du brouilleur. Néanmoins, il n'existe aucune méthode simple pour réaliser un étalement spectral excluant certaines bandes de fréquences prédéfinies.

Par ailleurs, on a déjà proposé d'utiliser des filtres linéaires périodiques numériques LPTV (Linear Periodic Time Varying) pour généraliser les techniques de transmission DS-CDMA (Direct Sequence - Code Division Multiple Access) classiques, dans lesquelles la séquence pseudo-aléatoire est remplacée par un filtre de ce type utilisé par exemple comme un entrelaceur. XP 13726A montre un procédé pour étaler le spectre d'un signal en utilisant filtre linéaire périodique numérique.

La présente invention a pour but de proposer un procédé d'étalement de spectre excluant certaines bandes de fréquences prédéfinies. Cet objectif est atteint par la prévision d'un procédé d'étalement de spectre d'un signal d'entrée numérique.

Selon l'invention, ce procédé comprend des étapes consistant à :

-    choisir des coefficients d'un filtre linéaire périodique numérique réversible, de manière à ce qu'il étale le spectre du signal d'entrée pour occuper une bande de fréquences étalée à l'exception d'au moins une sous-bande de fréquences effacée, incluse dans la bande de fréquences étalée, et
-    traiter le signal d'entrée à l'aide du filtre linéaire périodique numérique de manière à obtenir un signal de sortie à spectre étalé.

De préférence, la sortie du filtre linéaire périodique est apte à conserver  l'enveloppe du signal d'entrée.

Selon un mode de réalisation préféré de l'invention, le filtre linéaire périodique numérique présente une transformée en z dans une représentation fréquentielle de la forme suivante :

$$Y(z) = \sum_{p=0}^{N-1} T_p \cdot X(zW^p)$$

dans laquelle : $T_p = \dfrac{1}{N}\sum_{k=0}^{N-1} W^{g(k)+pk}$ , $W = \exp\left(-\dfrac{2i\pi}{N}\right)$ , N est la période du filtre, et g(k) pour les nombres entiers k compris entre 0 et N - 1 sont des coefficients à déterminer.

De préférence, le choix des coefficients g(k) comprend des étapes consistant à annuler les termes Tp du filtre pour toutes les valeurs de p telles que :

$$\left[-E\left(\frac{f_{max} - b_{min}}{B}N\right)\right]_N \leq p \leq \left[-E\left(\frac{f_{min} - b_{max}}{B}N\right) - 1\right]_N ,$$

expression dans laquelle [fmin, fmax] représente la bande de fréquences du signal numérique d'entrée, B représente la bande de fréquence étalée, [bmin, bmax] représente la sous-bande de fréquences effacée, incluse dans la bande de fréquences B, E(a) représente la fonction partie entière et $[a]_N$ représente la fonction "modulo N".

Avantageusement, l'annulation d'un terme Tp du filtre linéaire périodique consiste à regrouper tous les entiers compris entre 0 et N-1 en couples (k0, k1) tels que :

$$W^{g(k0)+pk0} + W^{g(k1)+pk1} = 0.$$

Selon un mode de réalisation préféré de l'invention, le filtre linéaire périodique est applicable à un signal d'entrée à enveloppe constante.

Selon un autre mode de réalisation préféré de l'invention, le signal d'entrée est préalablement suréchantillonné.

De préférence, avant d'être suréchantillonné, le signal d'entrée est traité par un modulateur numérique présentant une constellation à M points.

Selon un mode de réalisation préféré de l'invention, le signal de sortie du filtre linéaire périodique est suréchantillonné.

Selon un mode de réalisation préféré de l'invention, le signal de sortie suréchantillonné est traité par un filtre passe-bas en racine de cosinus surélevé.

Selon un mode de réalisation préféré de l'invention, le filtre linéaire périodique présente une période de la forme 2n, n étant un nombre entier positif.

Un mode de réalisation préféré de l'invention sera décrit ci-après, à titre d'exemple non limitatif, avec référence aux dessins annexés dans lesquels :

La figure 1 représente un exemple de chaîne de transmission numérique mettant en oeuvre le procédé d'étalement de spectre selon l'invention ;

La figure 2 montre plus en détail le filtre linéaire périodique figurant dans la chaîne de transmission représentée sur la figure 1;

La figure 3 est une représentation bifréquentielle d'un exemple de filtre du type représenté sur la figure 2 ;

La figure 4 montre plus en détail un mode de réalisation du filtre représenté sur la figure 2 ;

Les figures 5 à 13 montrent des exemples de spectres susceptibles d'être obtenus grâce au filtre représenté sur la figure 4.

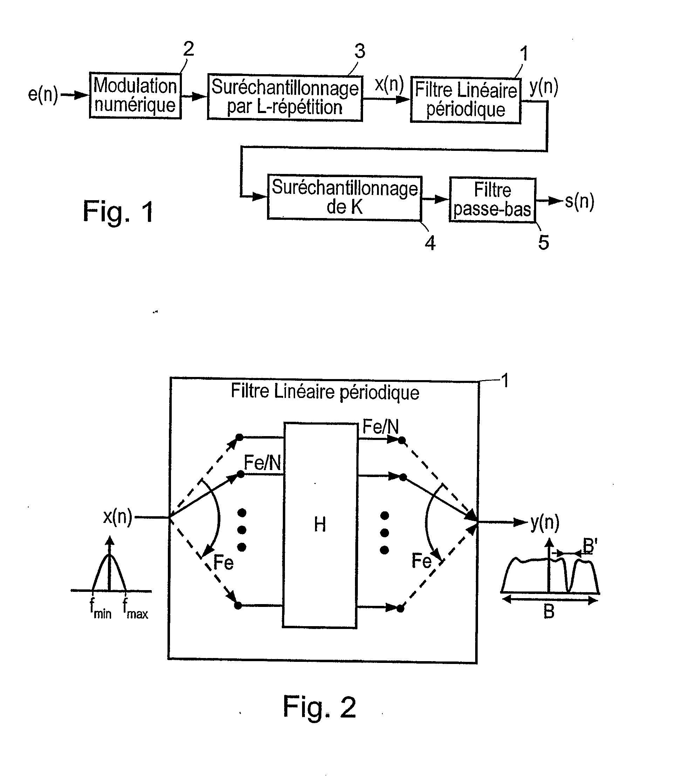

La figure 1 représente une chaîne de transmission de signaux numériques e(n) par étalement de spectre. Cette chaîne comprend tout d'abord un modulateur numérique 2, qui effectue un étiquettage des signaux d'entrée e(n) se présentant sous la forme de trains de bits. Le signal de sortie du modulateur numérique 2 est appliqué à l'entrée d'un premier suréchantillonneur 3 qui suréchantillonne le signal e(n) modulé en répétant L fois chaque échantillon de ce signal. Le signal suréchantillonné x(n) en sortie du suréchantillonneur 3 est appliqué à l'entrée d'un filtre linéaire périodique numérique 1 selon l'invention. Les échantillons y(n) obtenus en sortie du filtre 1 sont ensuite traités par un second suréchantillonneur 4 qui multiplie par un facteur K le nombre d'échantillons du signal qu'il traite, par exemple en insérant K échantillons nuls entre chaque échantillon du signal appliqué en entrée. Le signal de sortie du second suréchantillonneur 4 est enfin traité par un filtre numérique passe-bas 5 assurant une mise en forme spectrale du signal et délivrant un signal s(n) de sortie de la chaîne de transmission.

Le modulateur numérique est par exemple un modulateur à déplacement de phase (MDP-M, M-PSK, M-MSK) et/ou d'amplitude (MAQ-M), à M points de constellation.

Selon l'invention, le filtre 1 est choisi de manière à obtenir un signal de sortie dont le spectre est étalé avec des sous-bandes effacées. Ce filtre est un filtre linéaire périodique variant en fonction du temps (LPTV) illustré schématiquement sur la figure 2 sous la forme d'une représentation commutée en entrée et en sortie (MIMO : Multiple Input Multiple Output). Le filtre 1 comporte dans une représentation polyphase une fonction de transfert en z matricielle $\overline{H}(z)$ = [$H_{i,j}$(z)], comportant N voies (N entrées et N sorties), et un sélecteur de voie d'entrée synchrone avec un sélecteur de voie de sortie. Les sélecteurs de voies d'entrée et de sortie sont commandés à une cadence égale à Fe, Fe étant la fréquence d'échantillonnage du signal d'entrée x(n), et N étant la période du filtre. La fréquence du signal dans les voies d'entrée et de sortie est donc égale à Fe/N.

Ce filtre transforme le signal d'entrée x(n) compris dans la bande de fréquences [$f_{min}$, $f_{max}$] en un signal de sortie y(n) occupant une bande de fréquences B avec au moins une sous-bande B' effacée.

Ce filtre présente une réponse impulsionnelle variant en fonction du temps avec une périodicité N et peut être représenté par la relation suivante :

$$y(n) = \sum_{k=-\infty}^{+\infty} h(n,k) \cdot x(n-k) \qquad (1)$$

h(n, k) étant la réponse impulsionnelle du filtre à l'instant n. Comme le filtre présente une période égale à N, h vérifie l'égalité suivante :

$$h(n+N, k) = h(n, k) \qquad (2)$$

Dans la représentation polyphase à N composantes des signaux d'entrée x(n) et de sortie y(n) du filtre 1, les signaux x(n) et y(n) peuvent se décomposer de la manière suivante :

$$x(n) = [x_0(n), \ldots, x_{N-1}(n)] \text{ et } y(n) = [y_0(n), \ldots, y_{N-1}(n)] \qquad (3)$$

avec $x_k(n) = x(nN + k)$ et $y_k(n) = y(nN + k)$, k étant compris entre 0 et N-1.

La transformée en z de la composante $x_k(n)$ peut être obtenue à l'aide de la formule suivante :

$$X_k(z) = \sum_{n=-\infty}^{+\infty} x_k(n)z^{-n} \qquad (4)$$

On montre aisément que la transformée en z $Y_k(z)$ de la composante polyphase k du signal y(n) s'écrit en fonction de la transformée en z du signal x(n) de la manière suivante :

$$Y_k(z) = \sum_{j=0}^{N-1} X_j(z) \cdot H_{k,j}(z) \qquad (5)$$

avec :

$$\overline{X}(z) = [X_0(z) \quad X_1(z) \quad \ldots \quad X_{N-1}(z)] \qquad (6)$$

$$\overline{Y}(z) = [Y_0(z) \quad Y_1(z) \quad \ldots \quad Y_{N-1}(z)], \qquad (7)$$

$$\overline{\overline{H}}(z) = \begin{bmatrix} H_{0,0}(z) & H_{0,1}(z) & \cdots & H_{0,N-1}(z) \\ H_{1,0}(z) & H_{1,1}(z) & \cdots & H_{1,N-1}(z) \\ \vdots & \vdots & \ddots & \vdots \\ H_{N-1,0}(z) & H_{N-1,1}(z) & \cdots & H_{N-1,N-1}(z) \end{bmatrix}, \qquad (8)$$

et

$$\overline{Y}(z) = \overline{\overline{H}}(z) \cdot \overline{X}(z) \qquad (9)$$

Un tel filtre peut également être représenté sous forme fréquentielle en transformée en z de la manière suivante :

$$Y(z) = \sum_{p=0}^{N-1} T_p(zW^p) \cdot X(zW^p) \qquad (10)$$

dans laquelle W est la racine Nième de l'unité : $W = \exp(-2i\pi/N)$, et les termes $T_p(z)$ représentent des filtres modulateurs tels que :

$$T_p(z) = \frac{1}{N} \sum_{j=0}^{N-1} z^{-j} \sum_{k=0}^{N-1} H_{j,k}(z^N) \cdot z^k \cdot W^{pj} \qquad (11)$$

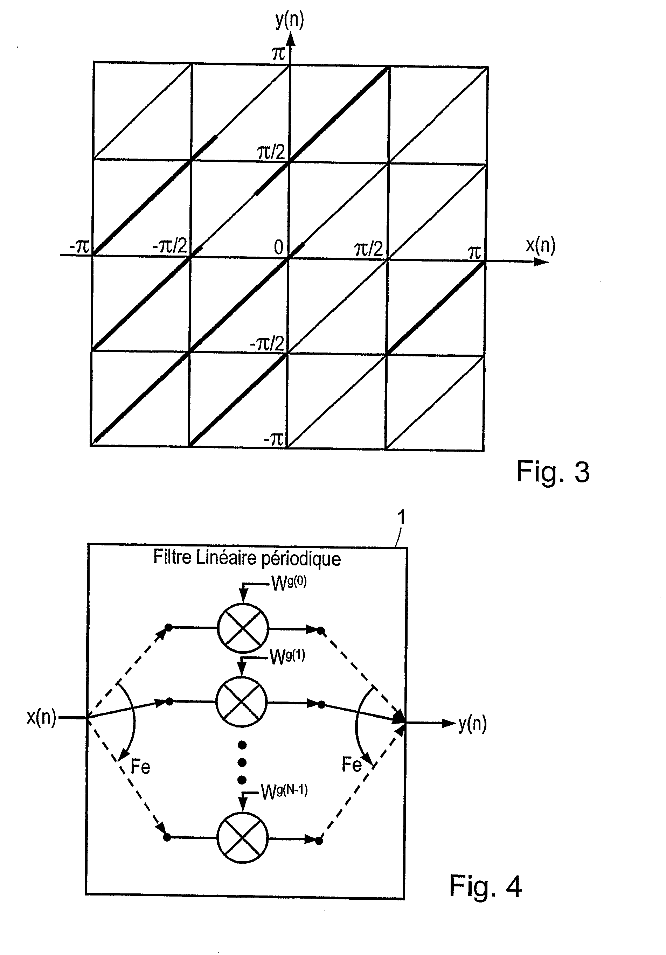

La figure 3 est une représentation bifréquentielle d'un exemple de filtre linéaire périodique de période N = 4 qui permet d'exprimer le spectre du signal d'entrée x(n). Cette figure montre en traits épais les zones où les réponses fréquentielles des filtres modulateurs Tp(z) sont non nuls (supérieures à un seuil donné).

Pour pouvoir déterminer en réception le signal x(n) en fonction du signal y(n) reçu, le filtre 1 doit être inversible. En outre, dans des applications avec transmission par satellite, les signaux sont amplifiés de manière non linéaire. Dans ce type d'applications, le signal après étalement doit être à enveloppe complexe constante.

Ces conditions sont remplies si l'on choisit un modulateur à déplacement de phase et un filtre linéaire périodique numérique ayant en représentation polyphase une matrice dont seules les composantes $H_{k,k}(z) = H_k(z)$ sont non nulles, et choisies égales à $W^{g(k)}$, g(k) (k variant de 0 à N-1) étant des coefficients réels. Il en résulte que :

$$T_p(z) = T_p = \frac{1}{N} \sum_{k=0}^{N-1} W^{g(k)+pk} \qquad (12)$$

Un tel filtre est illustré par la figure 4.

Le filtre inverse utilisable en réception $H'_k(z)$ donnant x(n) en fonction de y(n) pour la composante k est alors de la forme :

$$H'_k(z) = W^{-g(k)}. \qquad (13)$$

Par ailleurs, en transformée en z, le signal d'origine X(z) peut être obtenu à partir du signal reçu Y(z) par la relation suivante :

$$X(z) = \sum_{p=0}^{N-1} T'_p(zW^p) \cdot Y(zW^p) \qquad (14)$$

Il en résulte que :

$$T'_p(z) = T'_p = \frac{1}{N} \sum_{k=0}^{N-1} W^{-g(k)+pk} \qquad (15)$$

Selon l'invention, il est possible de déterminer les paramètres g(k) du filtre de manière à obtenir au moins une sous-bande B' effacée.

Or, pour annuler dans la sous-bande de fréquences $B' = [b_{min}, b_{max}]$ un signal de bande $[f_{min}, f_{max}]$, on démontre qu'il faut annuler les termes $T_p$ pour toutes les valeurs de p comprises dans le segment $[p_{min}, p_{max}]$ défini modulo N tel que :

$$p_{min} = \left[ - E\left( \frac{f_{max} - b_{min}}{B} N \right) \right]_N \qquad (16)$$

$$p_{max} = \left[ - E\left( \frac{f_{min} - b_{max}}{B} N \right) - 1 \right]_N \qquad (17)$$

Dans ces formules, l'expression "$[a]_N$" signifie "a modulo N", c'est-à-dire représente le reste de la division entière de a par N, et "E(a)" représente la partie entière de a.

Inversement, lorsque la bande de fréquences B' est occupée par un signal de brouillage, il s'agit d'éviter que le signal récupéré par le filtre LTPV inverse du filtre 1 ne contienne des résidus de brouillage dans la bande $[f_{min}, f_{max}]$. Il s'avère que cette condition est vérifiée si les filtres modulateurs inverses T'p sont nuls pour toutes les valeurs de p comprises dans l'intervalle $[p'_{min}, p'_{max}]$.

On démontre que :

$$p'_{min} = \left[ E\left( \frac{f_{min} - b_{max}}{B} N \right) + 1 \right]_N \qquad (18)$$

$$p'_{max} = \left[ E\left( \frac{f_{max} - b_{min}}{B} N \right) \right]_N \qquad (19)$$

Lorsque le filtre linéaire périodique numérique choisi est directement utilisé pour ré-étiquetter les symboles complexes en bribes à un rythme $R_C$, on choisit la bande de fréquences $[f_{min}, f_{max}]$ égale à $[-R_C/2, R_C/2]$ et la bande B égale à Fe.

Pour annuler les termes $T_p$ du filtre 1 pour une valeur $p_1$ de p (nombre entier), on se propose d'annuler deux à deux les quantités $W^{g(k)+p_1 k}$. Cette opération consiste à regrouper les éléments de l'ensemble $E_N$ des entiers compris entre 0 et N-1 en couples $(k_0, k_1)$ tels que :

$$W^{g(k_0)+p_1 k_0} + W^{g(k_1)+p_1 k_1} = 0 \qquad (20)$$

ce qui permet d'obtenir N/2 conditions portant sur les N coefficients g(k) du filtre:

$$g(k_0(j)) - g(k_1(j)) = \left[ p_1(k_1(j) - k_0(j)) + \frac{N}{2} \right]_N \qquad (21)$$

pour toutes les valeurs de j comprises entre 0 et $\frac{N}{2} - 1$. Les valeurs de g(k) sont donc liées deux par deux par $\frac{N}{2}$ équations linéaires.

L'algorithme qui suit est applicable au cas particulier où la période N du filtre est choisie de la forme $N = 2^n$, n étant un nombre entier.

Pour trouver un premier ensemble de couples $(k_0, k_1)$ d'éléments de l'ensemble EN des entiers compris entre 0 et N-1, on choisit un entier $a_1$ compris entre 0 et n-1, tel que $k_1(j) = k_0(j) + 2^{a_1}$ pour toutes les valeurs de j comprises

entre 0 et $\dfrac{N}{2} - 1 = 2^{n-1} - 1$. $2^{a_1}$ représente donc la "distance" entre les éléments $k_0$, $k_1$ formant les couples $(k_0, k_1)$.

Il s'avère que le fait d'annuler un terme $T_p$ pour une certaine valeur de p entraîne l'annulation d'autres termes $T_p$. En effet, si les termes $T_p$ sont nuls pour deux valeurs $p_a$ et $p_b$, on a la relation suivante :

$$\left[ p_a(k_1(j) - k_0(j)) + \frac{N}{2} \right]_N = \left[ p_b(k_1(j) - k_0(j)) + \frac{N}{2} \right]_N \qquad (22)$$

pour toutes les valeurs de j comprises entre 0 et $\dfrac{N}{2} - 1$.

Si $k_1(j) = k_0(j) + 2^{a_1}$, il résulte de l'équation (22) que :

$$[(p_b - p_a)2^{a_1}]_N = 0, \text{ soit } p_b = [p_a]_{2^{n-a_1}} \text{ si } N = 2^n. \qquad (23)$$

Par conséquent, si l'on annule un terme $T_p$ du filtre pour une valeur de p, on annule les termes $T_{p'}$ du filtre pour toutes les valeurs $p' = [p + j \cdot 2^{n-a_1}]_N$, ce qui réduit la qualité d'étalement si l'effacement des sous-bandes ainsi effacées est indésirable.

Si par exemple on annule le terme $T_0$, on annule également tous les termes $T_{[j2^{n-a_1}]_N}$. Si on choisit $a_1 = n-1$, tous les termes $T_{2p}$ sont aussi annulés.

Pour effacer une bande de fréquences B' = $[b_{min}, b_{max}]$, il faut que les termes $T_p$ du filtre s'annulent pour toutes les valeurs de p consécutives situées dans l'intervalle $[p_{min}, p_{max}]$. Il s'agit donc trouver de nouveaux couples d'éléments de l'ensemble EN qui doivent être tous distincts des précédents pour conserver l'annulation de $T_{p_1}$.

A cet effet, on regroupe deux par deux les couples utilisés à l'itération précédente en quadruplets, en choisissant une nouvelle valeur $a_2$ différente de $a_1$ telle que la "distance" entre les couples regroupés soit égale à $2^{a_2}$, c'est-à-dire que l'on regroupe en quadruplets les couples $(k_0, k_1)$ et $(k'_0, k'_1)$ tels que :

$$k'_0 = k_0 + 2^{a_2}. \qquad (24)$$

Cette condition permet d'obtenir par quadruplet $(k_0, k_1, k'_0, k'_1)$ deux nouvelles équations de la forme (21), qui sont en fait équivalentes :

$$g(k'_0(j)) - g(k_0(j)) = \left[ p_0(k'_0(j) - k_0(j)) + \frac{N}{2} \right]_N \qquad (25)$$

$$g(k'_1(j)) - g(k_1(j)) = \left[ p_0(k'_1(j) - k_1(j)) + \frac{N}{2} \right]_N \qquad (26)$$

soit une seule équation par quadruplet, c'est-à-dire $\dfrac{N}{4} = 2^{n-2}$ équations linéaires à N inconnues.

A l'itération suivante, on regroupe deux à deux en groupes de 8 entiers les quadruplets (groupes de 4 entiers) tels que le premier élément du second groupe est distant de $2^{a_3}$ du premier élément du premier groupe, chaque groupe ainsi obtenu fournit une équation supplémentaire sur les coefficients g(k) à déterminer.

Cette itération peut être répétée autant de fois que nécessaire dans une certaine limite, pour effacer totalement une bande B' de la largeur souhaitée, en prenant soin à chaque itération j de choisir toutes différentes des valeurs $a_j$ de distance entre les groupes regroupés, telles que $k'_0 = k_0 + 2^{a_j}$. A l'itération j, le degré de liberté pour le choix des coefficients g(k) est alors égal à $2^{n-j}$. On démontre que la largeur maximale de la bande susceptible d'être effacée correspond à un nombre maximum de filtres consécutifs nuls égal à $4(n - 3) + 3$.

Bien entendu d'autres formes de valeurs de la période N du filtre peuvent être choisies. Ainsi, si l'on choisit N de la forme $2^n + 4$, on peut constater que l'étalement produit par le filtre est de meilleure qualité (moins d'annulations indésirables de termes $T_p$).

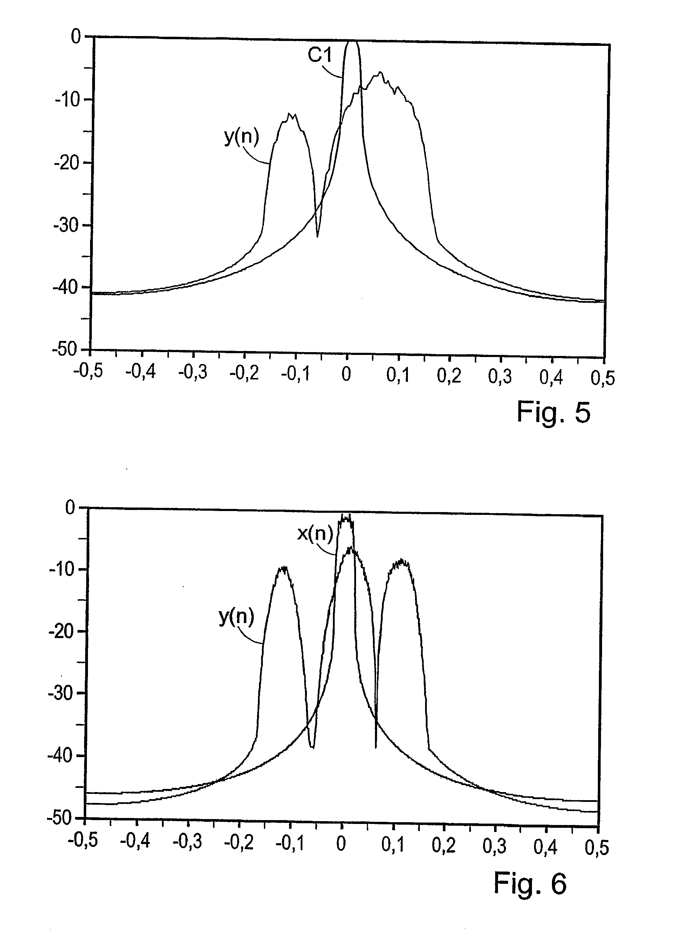

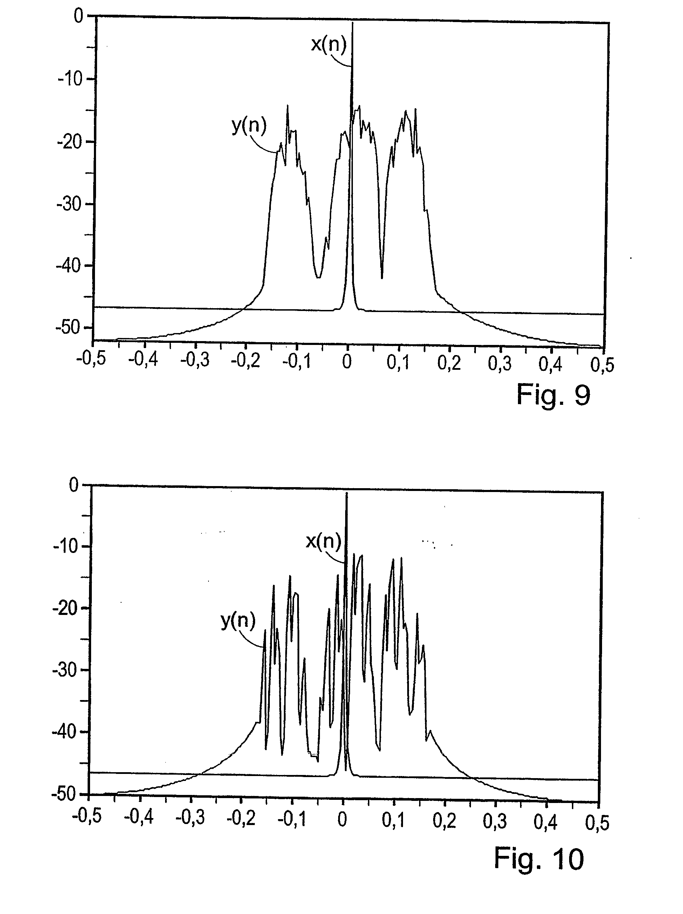

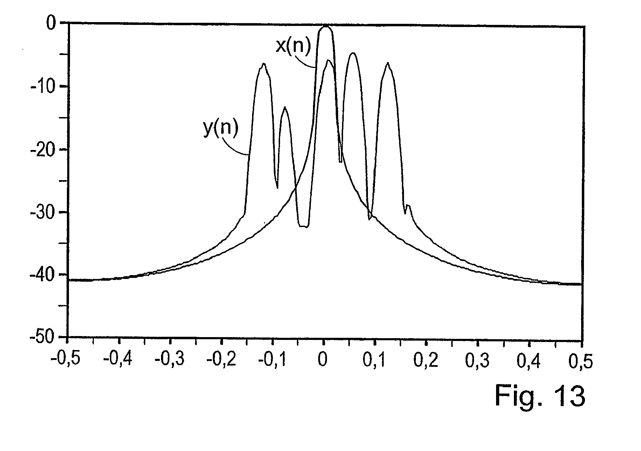

Les figures 5 à 13 illustrent les performances du dispositif représenté sur la figure 1 sous la forme de courbes spectrales des signaux x(n) et y(n) en fonction de la fréquence normalisée (f/Fe en abscisse), dans le cas où le modulateur numérique d'entrée 2 présente une constellation à deux points (M=2), le suréchantillonneur 4 présente un facteur K égal à 4, et le filtre de sortie 5 est en racine de cosinus surélevé.

Les spectres du signal y(n) sur les figures 5 à 10 sont obtenus avec un filtre linéaire périodique 1 de période N égale à $2^{10}$. Les spectres des figures 5 à 7 sont obtenus avec un faible étalement (le suréchantillonneur 3 présente un facteur d'étalement L égal à 8). Sur ces figures, les courbes spectrales du signal de sortie y(n) sont obtenues lorsque les termes $T_p$ du filtre 1 sont annulés au voisinage de la fréquence normalisée -0,07, pour respectivement trois, quatre et neuf valeurs de p consécutives, ce qui correspond à un degré de liberté D pour le choix des coefficients g(i) du filtre 1 respectivement égal à $2^7$, $2^6$ et 2.

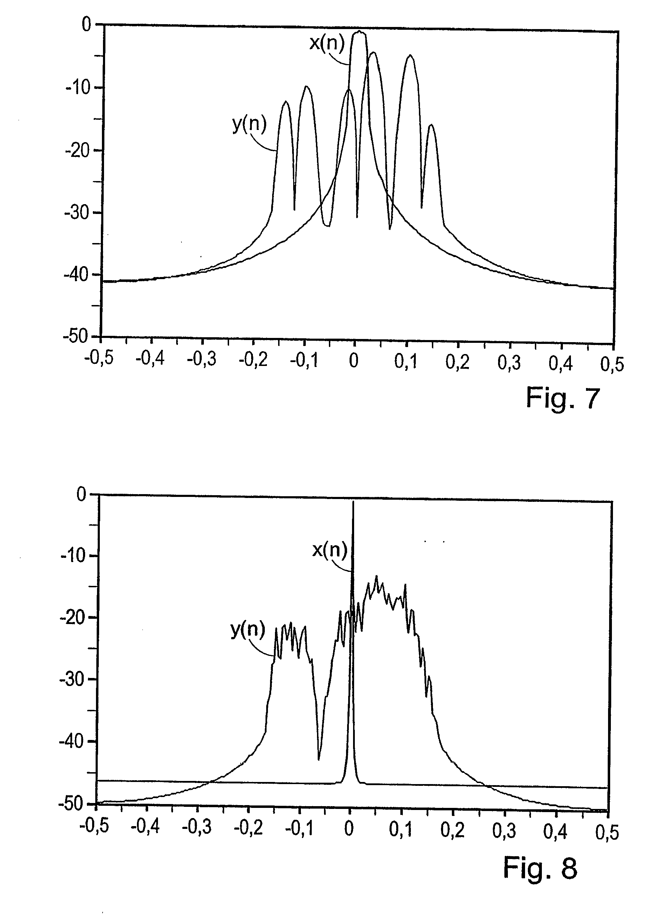

Les spectres des figures 8 à 10 sont obtenus avec un fort étalement (le suréchantillonneur 3 présente un facteur L égal à 128). Sur ces figures, les courbes spectrales du signal de sortie y(n) sont également obtenues lorsque les termes $T_p$ du filtre 1 sont annulés au voisinage de la fréquence normalisée -0,07 pour respectivement trois, quatre et neuf valeurs de p consécutives, ce qui correspond à un degré de liberté D pour le choix des coefficients g(i) du filtre 1 respectivement égal à $2^7$, $2^6$ et 2.

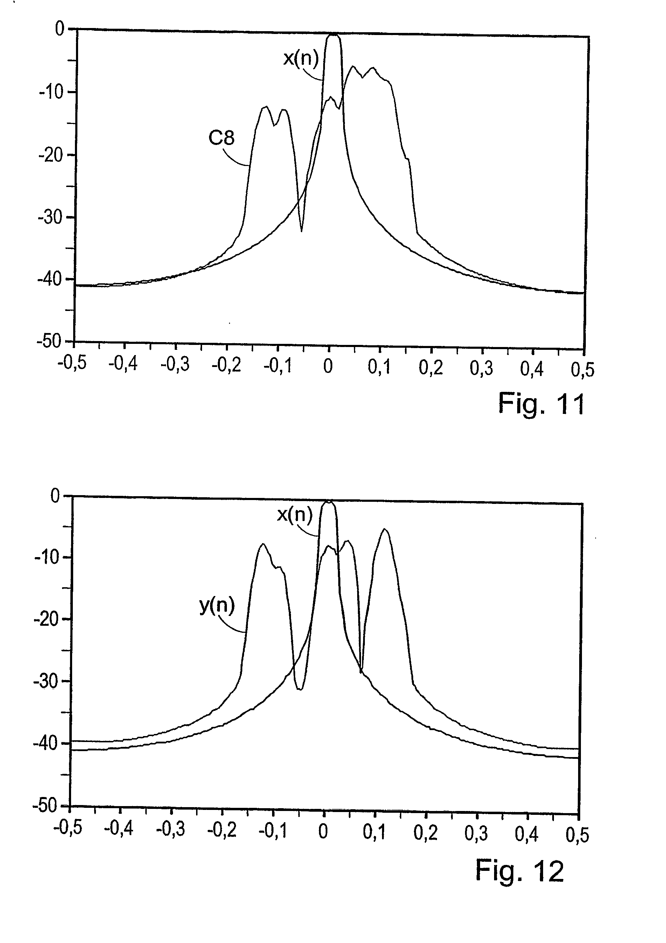

Sur les figures 11 à 13, les spectres sont obtenus avec un filtre linéaire périodique 1 dont la période N est égale à $2^7$ et avec un faible étalement (L = 8). Sur ces figures, les courbes spectrales du signal de sortie y(n) sont également obtenues lorsque les termes $T_p$ du filtre 1 sont annulés au voisinage de la fréquence normalisée -0,07 pour respectivement trois, quatre et six valeurs de p consécutives, ce qui correspond à un degré de liberté D pour le choix des coefficients g(i) du filtre 1 respectivement égal à $2^4$, $2^3$ et 2.

## Revendications

1. Procédé d'étalement de spectre d'un signal d'entrée numérique (x(n)), comprenant des étapes consistant à :

choisir des coefficients d'un filtre linéaire périodique numérique (1) réversible, présentant une transformée en z dans une représentation fréquentielle de la forme suivante :

$$Y(z) = \sum_{p=0}^{N-1} T_p \cdot X(zW^p)$$

dans laquelle:

$$T_p = \frac{1}{N} \sum_{k=0}^{N-1} W^{g(k)+pk} \; , \quad W = \exp\left(-\frac{2i\pi}{N}\right)$$ , N est la période du filtre, et g(k) pour les nombre entiers k compris entre 0 et N - 1 sont des coefficients à déterminer, de manière à ce qu'il étale le spectre du signal d'entrée (x(n)) pour occuper une bande de fréquences étalée (B), et

traiter le signal d'entrée à l'aide du filtre linéaire périodique numérique de manière à obtenir un signal de sortie (y(n)) à spectre étalé,

**caractérisé en ce que** le choix des coefficients g(k) est tel que le spectre du signal d'entrée occupe une bande de fréquence étalée (B) à l'exception d'au moins une sous-bande (B') de fréquences effacée, incluse dans la bande de fréquences étalée, le choix des coefficients g(k) comprenant des étapes consistant à annuler les termes $T_p$ du filtre pour toutes les valeurs de p telles que :

$$\left[-E\left(\frac{f_{max}-b_{min}}{B}N\right)\right]_N \le p \le \left[-E\left(\frac{f_{min}-b_{max}}{B}N\right)-1\right]_N,$$

expression dans laquelle $[f_{min}, f_{max}]$ représente, la bande de fréquences du signal numérique d'entrée (x(n)), B représente la bande de fréquence étalée, $[b_{min}, b_{max}]$ représente la sous-bande de fréquences (B') effacée, incluse dans la bande de fréquences B, E(a) représente la fonction partie entière et $[a]_N$ représente la fonction "modulo N".

2. Procédé selon la revendication 1,
   **caractérisé en ce que** la sortie du filtre linéaire périodique (1) est apte à conserver l'enveloppe du signal d'entrée (x(n)).

3. Procédé selon la revendication 1 ou 2,
   **caractérisé en ce que** l'annulation d'un terme $T_p$ du filtre linéaire périodique (1) consiste à regrouper tous les entiers compris entre 0 et N-1 en couples $(k_0, k_1)$ tels que

$$W^{g(k_0)+pk_0} + W^{g(k_1)+pk_1} = 0.$$

4. Procédé selon l'une des revendications 1 à 3,
   **caractérisé en ce que** le filtre linéaire périodique (1) est applicable à un signal d'entrée (x(n)) à enveloppe constante.

5. Procédé selon l'une des revendications 1 à 4,
   **caractérisé en ce que** le signal d'entrée (x(n)) est préalablement suréchantillonné

6. Procédé selon la revendication 5,
   **caractérisé en ce qu'**avant d'être suréchantillonné, le signal d'entrée (x(n)) est traité par un modulateur numérique présentant une constellation à M points.

7. Procédé selon l'une des revendications 1 à 6,
   **caractérisé en ce que** le signal de sortie (y(n)) du filtre linéaire périodique (1) est suréchantillonné.

8. Procédé selon la revendication 7,
   **caractérisé en ce que** le signal de sortie suréchantillonné est traité par un filtre passe-bas (5) en racine de cosinus surélevé.

9. Procédé selon l'une des revendications 1 à 8,
   **caractérisé en ce que** le filtre linéaire périodique (1) présente une période de la forme $2^n$, n étant un nombre entier positif.

**Patentansprüche**

1. Verfahren zum Verbreitern des Spektrums eines digitalen Eingangssignals (x(n)), das die folgenden Schritte umfasst, die darin bestehen:

   Koeffizienten eines reversiblen digitalen periodischen linearen Filters (1) zu wählen, das eine z-Transformierte in einer Frequenzdarstellung mit der folgenden Form aufweist:

$$Y(z) = \sum_{p=0}^{N-1} T_p \cdot X(zW^p)$$

wobei

$$T_p = \frac{1}{N}\sum_{k=0}^{N-1} W^{g(k)+pk} \, , \qquad W = \exp\left(-\frac{2i\pi}{N}\right),$$

N die Periode des Filters ist und g(k) für ganze Zahlen k im Bereich von 0 bis N - 1 zu bestimmende Koeffizienten sind, derart, dass das Spektrum des Eingangssignals (x(n)) verbreitert wird, um ein verbreitertes Frequenzband (B) zu belegen, und

das Eingangssignal mit Hilfe des digitalen periodischen linearen Filters in der Weise zu verarbeiten, dass ein Ausgangssignal (y(n)) mit verbreitertem Spektrum erhalten wird,

**dadurch gekennzeichnet, dass** die Wahl der Koeffizienten g(k) von der Art ist, dass das Spektrum des Eingangssignals ein verbreitertes Frequenzband (B) mit Ausnahme wenigstens eines Unterbandes (B') gelöschter Frequenzen, die in dem verbreiterten Frequenzband enthalten sind, belegt, wobei die Wahl der Koeffizienten g(k) die Schritte umfasst, die darin bestehen, die Terme $T_p$ des Filters für sämtliche Werte von p zu annullieren, derart, dass:

$$\left[-E\left(\frac{f_{max} - b_{min}}{B}N\right)\right]_N \leq p \leq \left[-E\left(\frac{f_{min} - b_{max}}{B}N\right)-1\right]_N$$

wobei in dem Ausdruck [$f_{min}$, $f_{max}$] das Frequenzband des digitalen Eingangssignals (x(n)) darstellt, B das verbreitete Frequenzband darstellt, [$b_{min}$, $b_{max}$] das gelöschte Frequenzunterband (B'), das in dem Frequenzband B enthalten ist, darstellt, E(a) der ganzzahlige Teil der Funktion ist und [a]$_N$ die Funktion "modulo N" darstellt.

2. Verfahren nach Anspruch 1,
   **dadurch gekennzeichnet, dass** das periodische lineare Filter (1) die Einhüllende des Eingangssignals (x(n)) beibehalten kann.

3. Verfahren nach Anspruch 1 oder 2,
   **dadurch gekennzeichnet, dass** die Annullierung eines Terms $T_p$ des periodischen linearen Filters (1) darin besteht, alle ganzen Zahlen im Bereich von 0 bis N - 1 in Paaren ($k_0$, $k_1$) umzugruppieren, derart, dass:

$$W^{g(k_0)+pk_0} + W^{g(k_1)+pk_1} = 0$$

4. Verfahren nach einem der Ansprüche 1 bis 3,
   **dadurch gekennzeichnet, dass** das periodische lineare Filter (1) auf ein Eingangssignal (x(n)) mit konstanter Einhüllender anwendbar ist.

5. Verfahren nach einem der Ansprüche 1 bis 4, **dadurch gekennzeichnet, dass** das Eingangssignal (x(n)) im Voraus überabgetastet wird.

6. Verfahren nach Anspruch 5, **dadurch gekennzeichnet, dass** das Eingangssignal (x(n)), bevor es überabgetastet wird, durch einen digitalen Modulator verarbeitet wird, der eine Konstellation mit M Punkten aufweist.

7. Verfahren nach einem der Ansprüche 1 bis 6,
   **dadurch gekennzeichnet, dass** das Ausgangssignal (y(n)) des periodischen linearen Filters (1) überabgetastet wird.

**8.** Verfahren nach Anspruch 7, **dadurch gekennzeichnet, dass** das überabgetastete Ausgangssignal durch ein Tiefpassfilter (5) mit der Wurzel des erhöhten Kosinus verarbeitet wird.

**9.** Verfahren nach einem der Ansprüche 1 bis 8, **dadurch gekennzeichnet, dass** das periodische lineare Filter (1) eine Periode der Form $2^n$ aufweist, wobei n eine positive ganze Zahl ist.

**Claims**

**1.** Method for spreading the spectrum of a digital input signal (x(n)), comprising steps consisting in:

choosing coefficients of a reversible digital periodic linear filter (1), having a z-transform in a frequency representation of the following form:

$$Y(z) = \sum_{p=0}^{N-1} T_p \cdot X(zW^p)$$

in which:

$$T_p = \frac{1}{N} \sum_{k=0}^{N-1} W^{g(k)+pk} , \quad W = \exp\left(-\frac{2i\pi}{N}\right),$$

N is the filter period, and g(k) for integer numbers k lying between 0 and N-1 are coefficients to be determined, in such a way that it spreads the spectrum of the input signal (x(n)) to occupy a spread frequency band (B), and processing the input signal using the digital periodic linear filter in such a way as to obtain a spread-spectrum output signal (y(n)), **characterized in that** the choice of the coefficients g(k) is such that the spectrum of the input signal occupies a spread frequency band (B), with the exception of at least one eliminated frequency sub-band (B'), included in the spread frequency band, the choice of the coefficients g(k) comprising steps consisting in cancelling the terms $T_p$ of the filter for all values of p such that:

$$\left[-E\left(\frac{f_{max} - b_{min}}{B}N\right)\right]_N \leq p \leq \left[-E\left(\frac{f_{min} - b_{max}}{B}N\right)-1\right]_N ,$$

an expression in which $[f_{min}, f_{max}]$ represents the frequency band of the digital input signal (x(n)), B represents the spread frequency band, $[b_{min}, b_{max}]$ represents the eliminated frequency sub-band (B'), included in the frequency band B, E(a) represents the integer part function and $[a]_N$ represents the "modulo N" function.

**2.** Method according to Claim 1, **characterized in that** the output of the periodic linear filter (1) is able to retain the envelope of the input signal (x(n)).

**3.** Method according to Claim 1 or 2, **characterized in that** the cancellation of a term $T_p$ of the periodic linear filter (1) consists in grouping all the integers lying between 0 and N-1 into pairs $(k_0, k_1)$ such that

$$W^{g(k_0)+pk_0} + W^{g(k_1)+pk_1} = 0.$$

4. Method according to one of Claims 1 to 3,
   **characterized in that** the periodic linear filter (1) is applicable to an input signal (x(n)) with a constant envelope.

5. Method according to one of Claims 1 to 4,
   **characterized in that** the input signal (x(n)) is previously oversampled.

6. Method according to Claim 5,
   **characterized in that** before being oversampled, the input signal (x(n)) is processed by a digital modulator with an M-point constellation.

7. Method according to one of Claims 1 to 6, **characterized in that** the output signal (y(n)) of the periodic linear filter (1) is oversampled.

8. Method according to Claim 7,
   **characterized in that** the oversampled output signal is processed by a root-raised cosine low-pass filter (5).

9. Method according to one of Claims 1 to 8,
   **characterized in that** the periodic linear filter (1) has a period of the form $2^n$, n being a positive integer number.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13